# EUROPÄISCHE PATENTANMELDUNG

(11) **EP 1 193 175 A2**
(43) Veröffentlichungstag der Anmeldung: **03.04.2002**
(21) Anmeldenummer: 01122621.4
(22) Anmeldetag: 27.09.2001
(51) Int. Cl.: B64F 1/32

(54) **Versorgungsfahrzeug mit verschiebbarem Fahrerhaus und absenkbarer Frontplattform**

(30) Priorität: 29.09.2000 DE 10048474
(71) Anmelder: Kögel Fahrzeugwerke Aktiengesellschaft, D-89016 Ulm (DE)
(72) Erfinder: Haupt, Jürgen, 89264 Weissenhorn/Bubenhausen (DE)
(74) Vertreter: HOFFMANN - EITLE

(57) **Zusammenfassung**

Die Erfindung betrifft ein Versorgungsfahrzeug, insbesondere ein Versorgungsfahrzeug zum Be- und Entladen von Flugzeugen, mit einem Fahrerhaus 1 sowie einer Übergabeplattform 2, die an der Frontseite des Fahrzeugs angeordnet ist. Das Fahrerhaus 1 ist zumindest in einer Richtung quer zur Fahrtrichtung des Versorgungsfahrzeugs versetzbar, und die Übergabeplattform 2 ist zumindest auf eine erste Übergabehöhe absenkbar, die unterhalb der Dachfläche des Fahrerhauses 1 liegt.

## Beschreibung

### Technisches Gebiet

Die Erfindung betrifft ein Versorgungsfahrzeug, insbesondere ein Versorgungsfahrzeug zum Be- und Entladen von Flugzeugen, mit einem Fahrerhaus sowie einer Übergabeplattform, die an der Frontseite des Fahrzeugs angeordnet ist.

Solche Versorgungsfahrzeuge werden beispielsweise im Catering-Bereich von Fluglinien verwendet, um fertig zubereitete Lebensmittel zur Versorgung von Fluggästen und der Besatzung von einer Küche zu einem Flugzeug zu transportieren. Um die Ladung dann vom Versorgungsfahrzeug in das Flugzeug umladen zu können, ist es notwendig, die Übergabeplattform des Versorgungsfahrzeugs auf die Höhe einer Türöffnung des Flugzeugs anzuheben oder abzusenken.

### Stand der Technik

Zum Be- und Entladen von Flugzeugen sind verschiedene Typen von Versorgungsfahrzeugen im Einsatz. So werden beispielsweise Standard-LKWs verwendet, deren Übergabeplattform oberhalb des Fahrerhauses angeordnet ist und zum Be- und Entladen eines Flugzeugs auf die Höhe einer Türöffnung des Flugzeugs angehoben werden kann. Bei diesen Standard-LKWs ist es jedoch nicht möglich, die Übergabeplattform auf eine Übergabehöhe abzusenken, die unterhalb der Höhe des Fahrerhausdachs liegt. Da die Höhe des Fahrerhausdachs in der Regel etwa 2,4 m beträgt, sind diese Standard-LKWs zum Be- und Entladen von kleineren Flugzeugen nicht geeignet.

Um diesem Problem abzuhelfen, sind Versorgungsfahrzeuge entwickelt worden, deren Fahrerhaus tiefer angeordnet ist als das Fahrerhaus eines Standard-LKWs. Mit solchen Versorgungsfahrzeugen lassen sich minimale Übergabehöhen von etwa 2,1 m realisieren; zum Be- und Entladen einer Reihe von kleineren Flugzeugen sind diese Versorgungsfahrzeuge daher ebenfalls nicht geeignet.

Des weiteren sind Versorgungsfahrzeuge bekannt, deren Fahrerhaus sich nicht über die gesamte Fahrzeugbreite erstreckt und deren Übergabeplattform vorn neben dem Fahrerhaus angeordnet ist. Die minimale Übergabehöhe wird so nicht mehr durch die Höhe des Fahrerhausdachs bestimmt, und die Übergabeplattform kann neben dem Fahrerhaus auf- und abbewegt und auf etwa 1,3 m abgesenkt werden, so dass auch kleine Flugzeuge be- und entladen werden können. Das Fahrerhaus eines solchen Versorgungsfahrzeugs kann jedoch nur einen einzigen Fahrersitz sowie evtl. einen Notsitz aufnehmen, und die Anschaffungskosten für ein solches Versorgungsfahrzeug sind übermäßig hoch, da kein Standard-Fahrerhaus verwendet werden kann.

Die DE-OS 38 00 509 beschreibt darüber hinaus ein Versorgungsfahrzeug, dessen Übergabeplattform nicht an der Frontseite des Fahrzeugs, sondern an der Rückseite eines Kofferaufbaus des Versorgungsfahrzeugs so angeordnet ist, dass sie bis auf den Boden absenkbar und bis auf eine Höhe oberhalb des Fahrerhausdachs anhebbar ist. Aus Sicherheitsgründen ist es jedoch nicht gestattet, dass Versorgungsfahrzeuge rückwärts an ein Flugzeug heranfahren, so dass das in der DE-OS 38 00 509 beschriebene Versorgungsfahrzeug nur mittels einer Fernsteuereinrichtung an das Flugzeug herangefahren werden kann.

### Darstellung der Erfindung

Der Erfindung liegt die Aufgabe zugrunde, ein weniger aufwendiges Versorgungsfahrzeug und insbesondere ein weniger aufwendiges Versorgungsfahrzeug zum Be- und Entladen von Flugzeugen zu schaffen, dessen Übergabeplattform auf Übergabehöhen unterhalb des Fahrerhausdachs absenkbar ist.

Die Lösung dieser Aufgabe erfolgt durch das im Patentanspruch 1 beschriebene Versorgungsfahrzeug.

Demzufolge ist das Fahrerhaus zumindest in einer Richtung quer zur Fahrtrichtung des Versorgungsfahrzeugs versetzbar, und die Übergabeplattform ist zumindest auf eine erste Übergabehöhe absenkbar, die unterhalb der Dachfläche des Fahrerhauses liegt.

Dies führt zu dem wesentlichen Vorteil, dass auch niedrige Übergabehöhen angefahren werden können, um auch kleinere Flugzeuge zu beladen und zu entladen, während das Versorgungsfahrzeug weiterhin ein Standard-Fahrerhaus mit bis zu drei Sitzen aufweist. Aufgrund der weiterhin vorn am Fahrzeug angeordneten Übergabeplattform kann der Fahrzeugführer das Versorgungsfahrzeug vom Fahrerhaus aus direkt bis an das Flugzeug heranfahren und das Fahrerhaus dann verschieben. Da das Fahrerhaus vorzugsweise nur mittels Leitungen, Kabeln und Schläuchen mit dem Fahrgestell verbunden ist, kann die komplette Fahrerhauslagerung inklusive Fahrerhaus verschoben werden, und zwar automatisch oder manuell. Anschließend kann die Übergabeplattform auf die gewünschte Höhe abgesenkt werden.

Ein einziges Versorgungsfahrzeug kann daher zum Be- und Entladen aller gängigen Flugzeugtypen verwendet werden, was die Einsatzplanung des Versorgungsunternehmens wesentlich erleichtert und flexibilisiert. Die Verwendung eines Standard-Fahrerhauses hält die Anschaffungskosten für ein erfindungsgemäßes Versorgungsfahrzeug niedrig und bietet darüber hinaus Platz für einen Fahrer und zumindest einen Beifahrer.

Abgesehen vom Catering-Bereich kann das erfindungsgemäße Fahrzeugs beispielsweise auch für den Behindertentransport, für den Sitztransport, als Serviceplattform oder VIP-Lounge verwendet werden.

Während es grundsätzlich denkbar ist, dass das Fahrerhaus lediglich in einer Richtung quer zur Fahrtrichtung des Versorgungsfahrzeugs versetzbar ist, wird bevorzugt, dass das Fahrerhaus in beiden Richtungen seitlich versetzbar ist, und zwar vorzugsweise um zumindest 0,5 m. Die seitliche Versetzung des Fahrerhauses erfolgt dabei vorzugsweise über zumindest einen Hydraulikzylinder, denkbar sind jedoch auch alle anderen Antriebsarten wie beispielsweise Elektro-, Pneumatik- oder mechanische Antriebe.

Vor allem wenn zudem die Position zumindest eines Teils der Übergabeplattform ebenfalls seitlich verstellt werden kann, ergibt sich eine flexible Anpassungsmöglichkeit der Position der Übergabeplattform an die Lage der Türöffnung des zu beladenden Flugzeugs.

Wenn das Fahrerhaus nur mittels Leitungen, Kabeln und Schläuchen mit dem Fahrgestell verbunden ist, kann die komplette Fahrerhauslagerung inklusive Fahrerhaus verschoben werden, und zwar automatisch oder manuell.

Um alle gängigen Flugzeugtypen be- und entladen zu können, sollte die erste, minimale Übergabehöhe etwa 1,3 m betragen. Zum Absenken der Übergabeplattform auf diese minimale Übergabehöhe kann die Übergabeplattform an einer ersten vertikalen Laufschiene gelagert sein, die Teil des Versorgungsfahrzeugs ist.

Während der Fahrt des Versorgungsfahrzeugs befindet sich die Übergabeplattform in einer Transportposition, vorzugsweise direkt oberhalb des Fahrerhauses.

In einer weiteren vorteilhaften Ausgestaltung der Erfindung ist die Übergabeplattform sogar bis zum Boden absenkbar. So können Übergabehöhen von 0 m bis zumindest 2 m angefahren werden. Zum Absenken der Übergabeplattform bis auf den Boden kann eine zweite Laufschiene vorgesehen sein, die sich relativ zur ersten Laufschiene bewegt. Bei bis auf den Boden absenkbarer Übergabeplattform kann diese auch zum ebenerdigen Be- und Entladen des Versorgungsfahrzeugs selbst verwendet werden, so dass eine zusätzliche Heckladebordwand überflüssig wird.

Schließlich ist das Versorgungsfahrzeug zur Aufnahme der Ladung mit einer Ladefläche und/oder einem Kofferaufbau versehen. Dieser Kofferaufbau ist entweder fest mit dem Versorgungsfahrzeug verbunden oder aber auswechselbar, was den Einsatz der Versorgungsfahrzeuge weiter flexibilisiert. Vorzugsweise ist der Kofferaufbau bzw. die Ladefläche anhebbar auf dem Versorgungsfahrzeug angeordnet. Zum Anheben der Übergabeplattform auf eine zweite, maximale Übergabehöhe, die oberhalb des Fahrerhausdachs liegt und zumindest 2 m beträgt, ist die Übergabeplattform vorzugsweise so mit dem Kofferaufbau bzw. der Ladefläche gekoppelt, dass sie beim Anheben des Kofferaufbaus bzw. der Ladefläche über Mitnehmer ebenfalls angehoben wird.

### Kurze Beschreibung der Zeichnungen

Nachfolgend wird die Erfindung anhand einer beispielhaft in den Zeichnungen dargestellten Ausführungsform näher erläutert.

Im einzelnen zeigt:
- Fig. 1: eine Seitenansicht des vorderen Teils eines erfindungsgemäßen Versorgungsfahrzeugs und
- Fig. 2: eine Draufsicht des vorderen Teils eines erfindungsgemäßen Versorgungsfahrzeugs.

### Beschreibung einer bevorzugten Ausführungsform der Erfindung

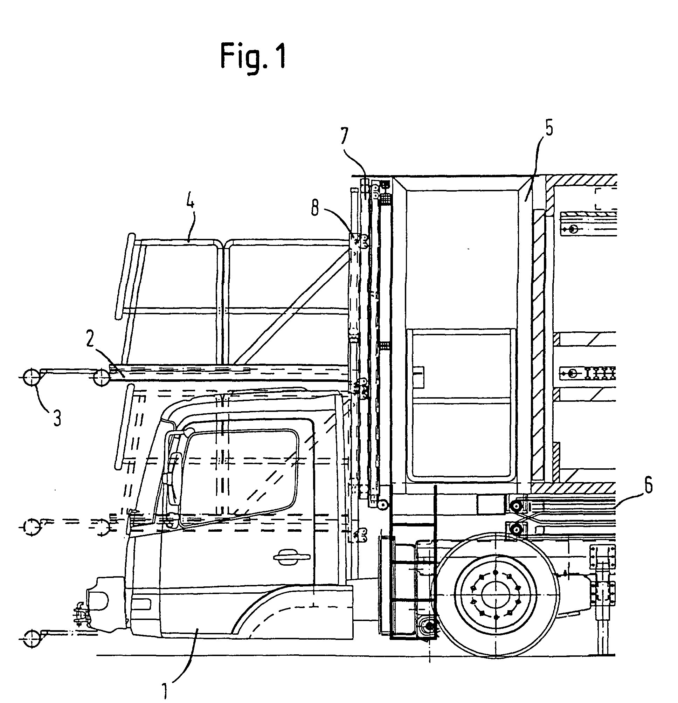

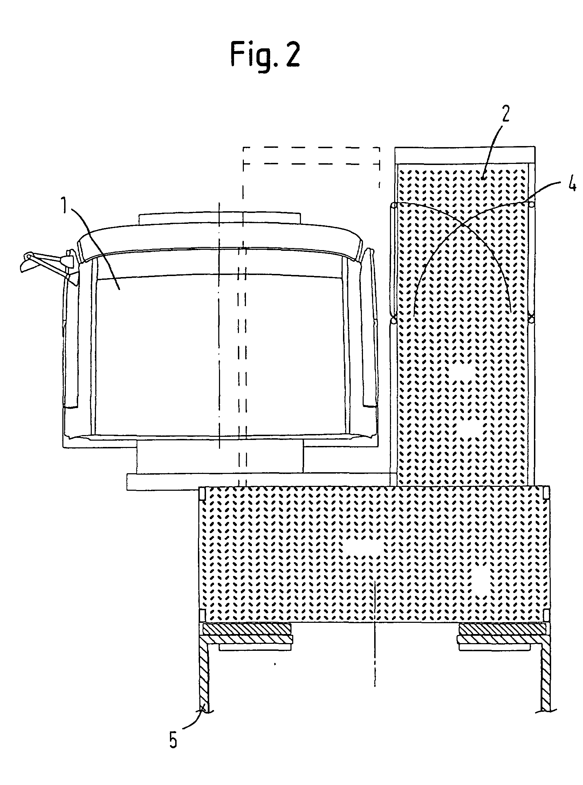

Die Fig. 1 und 2 zeigen den vorderen Teil eines erfindungsgemäßen Versorgungsfahrzeugs. In Transportstellung befindet sich die Übergabeplattform 2 des Fahrzeugs direkt oberhalb des Fahrerhauses 1, das als Standard-Fahrerhaus ausgeführt ist und zumindest zwei Insassen nebeneinander aufnehmen kann. Die Übergabeplattform ist mit einem Geländer 4 sowie mit einem Anfahrschutz 3 ausgestattet, mittels derer die Übergabeplattform an einer Türöffnung eines Flugzeugs angepasst werden kann. Das Fahrzeug weist weiter einen Kofferaufbau 5 auf, der mittels einer Hubschere 6 anhebbar ist und der in dieser Ausführungsform fester Bestandteil des Versorgungsfahrzeugs ist. An dem Kofferaufbau sind zwei vertikale Laufschienen 7, 8 angebracht.

Wie insbesondere aus Fig. 2 ersichtlich ist, ist das Fahrerhaus 1 seitlich verschiebbar; in Fig. 2 ist es bezüglich seiner normalen Fahrstellung nach links verschoben. Die Übergabeplattform 2 kann daher neben dem Fahrerhaus 1 nach unten abgesenkt werden, wobei in der beschriebenen Ausführungsform die erste Laufschiene 7 zum Absenken der Übergabeplattform bis auf etwa 1,3 m und die zweite Laufschiene 8 zum Absenken der Übergabeplattform bis auf den Boden dient. Die abgesenkten Stellungen sind in Fig. 1 durch gestrichelte Linien angedeutet. Ebenso sind natürlich beliebige Stellungen zwischen den dargestellten Stellungen anfahrbar.

Aus Fig. 2 geht weiter hervor, dass es möglich ist, die Übergabeplattform 2 ebenfalls seitlich zu verschieben, und zwar beispielsweise in die durch gestrichelte Linien angedeutete Stellung. Das Fahrerhaus 1 müsste in diesem Fall nach rechts verschoben werden, um das Absenken der Übergabeplattform 2 zu ermöglichen.

Zum Be- und Entladen von größeren Flugzeugen, deren Türöffnung sich auf einer Höhe oberhalb des Fahrerhausdachs des Versorgungsfahrzeugs befindet, kann der gesamte Kofferaufbau 5 mittels der Hubschere 6 angehoben werden. Die Übergabeplattform 2 ist so mit dem Kofferaufbau verbunden, dass sie dabei ebenfalls angehoben wird, bis der Anfahrschutz 3 sich auf einer Höhe mit der Türöffnung des Flugzeugs befindet.

## Patentansprüche

1. Versorgungsfahrzeug, insbesondere Versorgungsfahrzeug zum Be- und Entladen von Flugzeugen, mit einem Fahrerhaus (1) sowie einer Übergabeplattform (2), die an der Frontseite des Fahrzeugs angeordnet ist,
**dadurch gekennzeichnet, dass**
das Fahrerhaus (1) zumindest in einer Richtung quer zur Fahrtrichtung des Versorgungsfahrzeugs versetzbar ist und dass die Übergabeplattform (2) zumindest auf eine erste Übergabehöhe absenkbar ist, die unterhalb der Dachfläche des Fahrerhauses (1) liegt.

2. Versorgungsfahrzeug nach Anspruch 1, **dadurch gekennzeichnet, dass** das Fahrerhaus (1) in beiden Richtungen quer zur Fahrtrichtung des Versorgungsfahrzeug versetzbar ist.

3. Versorgungsfahrzeug nach Anspruch 1 oder 2, **dadurch gekennzeichnet, dass** das Fahrerhaus (1) um zumindest 0,5 m seitlich versetzbar ist.

4. Versorgungsfahrzeug nach einem der vorangehenden Ansprüche, **dadurch gekennzeichnet, dass** die erste Übergabehöhe etwa 1,3 m beträgt.

5. Versorgungsfahrzeug nach einem der vorangehenden Ansprüche, **dadurch gekennzeichnet, dass** die Übergabeplattform (2) auf eine zweite Übergabehöhe anhebbar ist.

6. Versorgungsfahrzeug nach Anspruch 5, **dadurch gekennzeichnet, dass** die zweite Übergabehöhe zumindest 2 m beträgt.

7. Versorgungsfahrzeug nach einem der vorangehenden Ansprüche, **dadurch gekennzeichnet, dass** die Übergabeplattform (2) über eine erste Laufschiene (7) mit dem Versorgungsfahrzeug verbunden ist.

8. Versorgungsfahrzeug nach einem der vorangehenden Ansprüche, **dadurch gekennzeichnet, dass** die Übergabeplattform (2) bis zum Boden absenkbar ist.

9. Versorgungsfahrzeug nach einem der vorangehenden Ansprüche, **dadurch gekennzeichnet, dass** zum Absenken der Übergabeplattform eine zweite Laufschiene (8) vorgesehen ist.

10. Versorgungsfahrzeug nach einem der vorangehenden Ansprüche, **dadurch gekennzeichnet, dass** das Versorgungsfahrzeug eine Ladefläche, einen auswechselbaren Kofferaufbau oder einen Kofferaufbau aufweist, der fest mit dem Versorgungsfahrzeug verbunden ist.
